# EUROPÄISCHE PATENTANMELDUNG

(11) **EP 1 777 791 A2**
(43) Veröffentlichungstag der Anmeldung: **25.04.2007**
(21) Anmeldenummer: 06021384.0
(22) Anmeldetag: 12.10.2006
(51) Int. Cl.: H02G 3/06

(54) **Abschluss- und/oder Verbindungsstück**

(30) Priorität: 19.10.2005 DE 102005049967; 11.10.2006 DE 102006048474
(71) Anmelder: Hiendl, Helmut, 94315 Straubing (DE)
(72) Erfinder: Hiendl, Helmut, 94315 Straubing (DE)
(74) Vertreter: Graf, Helmut

(57) **Zusammenfassung**

Bei einem Abschluss- und/oder Verbindungsstück zur Befestigung am Ende wenigstens eines Abdeckprofils für Leitungen sind erste zwischen dem Abschluss- und/oder Verbindungsstück und dem Abdeckprofil wirkende Verbindungsmittel zum Herstellen einer bezogen auf eine erste Achsrichtung radialen formschlüssigen Verbindung zwischen dem Abdeckprofil und dem Abschluss- und/oder Verbindungsstück durch Stecken oder Fügen sowie durch zweite in dem Abschluss- und/oder Verbindungsstück integrierte, zwischen diesem und dem Abdeckprofil wirkende und in dieses Profil eingreifenden Verbindungsmittel für ein Fixieren der Verbindung in axialer Richtung vorgesehen.

## Beschreibung

Die Erfindung bezieht sich auf ein Abschluss- und/oder Verbindungsstück zur Verwendung mit wenigstens einem Abdeckprofil oder einer Kabelbrücke für Leitungen gemäß Oberbegriff Patentanspruch 1.

Bekannt ist ein insbesondere auch als Kabelbrücke geeignetes Abdeckprofil (DE 101 48 937) bestehend aus einem durch Extrudieren hergestellten Profilkörper, der wenigstens einen Kanal zur Aufnahme von Leitungen und/oder Kabeln aufweist und zumindest an Randbereichen seiner Längsseiten aus einem Material (Kunststoff) hergestellt ist, dessen Dichte größer als 1,8 g/cm³ und dessen Elastizitätmodul kleiner als 500 N/mm² ist. Durch diese Ausbildung ist gewährleistet, dass das Abdeckprofil nach dem Verlegen auf einem Untergrund, beispielsweise auf dem Boden eines Gebäudeinnenraums nicht nur dicht aufliegt, sondern sich auch an Bodenunebenheiten anschmiegt, und zwar ohne weitere Befestigungsmaßnahmen, sodass u.a. eine Unfallgefahr durch Stolpern über dieses Abdeckprofil wirksam vermieden ist.

Aufgabe der vorliegenden Erfindung ist es, ein Abschluss- und/oder Verbindungsstück aufzuzeigen, welches auf einfache Weise an dem wenigstens einem Ende des Abdeckprofils formschlüssig befestigt werden kann, und zwar ohne Kleben und ohne die Gefahr, dass die formschlüssige und damit auch kraftschlüssige Verbindung zwischen dem Abschluss- und/oder Verbindungsstück und dem Abdeckprofil durch Alterungserscheinungen, wie Materialermüdung oder Kriechen des Materials verloren geht.

Zur Lösung dieser Aufgabe ist ein Abschluss- und/oder Verbindungsstück entsprechend dem Patentanspruch 1 ausgebildet.

Die formschlüssige Verbindung zwischen dem Abdeckprofil oder Kabelbrückenprofil und dem Abschluss- und/oder Verbindungsstück kann bei der Erfindung grundsätzlich ohne die Verwendung eines zusätzlichen Werkzeugs realisiert werden, da die die formschlüssige Verbindung bewirkenden Verbindungsmittel im Abschluss- und/oder Verbindungsstück integriert sind. Das Abschluss- und/oder Verbindungsstück bildet selbst das Werkzeug, welches für die Herstellung der formschlüssigen Verbindung mit dem Abdeckprofil erforderlich ist.

Die mit der Erfindung erzielte formschlüssige Verbindung ist sehr wirksam bzw. hoch belastbar und unterliegt keiner Schwächung durch Materialermüdung oder Materialkriechen, obwohl das Abdeckprofil selbst als extrudiertes Profil nur ohne Hinterschneidungen hergestellt werden kann, die für eine kaftschlüssige Verbindung geeignet wären.

In Weiterbildung der Erfindung kann das erfindungsgemäße Abschluss- und/oder Verbindungsstück u.a. auch folgende Merkmale aufweisen, und zwar jeweils einzeln oder in beliebigen Kombinationen:
Die erste Achsrichtung entspricht der Längserstreckung des Abdeckprofils entspricht; und/oder
die ersten Verbindungsmittel sind von wenigstens einem einen Anschlussbereich zwischen dem Abdeckprofil und dem Abschluss- und/oder Verbindungsstück überbrückenden Zapfen gebildet;
der wenigstens eine die ersten Verbindungsmittel bildende Zapfen ist an einer Anschlussseite des Abschluss- und/oder Verbindungsstücks vorgesehen, an der dieses Verbindungsstück stumpf an das Abdeckprofil anschließt, vorzugsweise stumpf anschließt; und/oder
der wenigstens eine, die ersten Verbindungsmittel bildende Vorsprung oder Zapfen ist am Abschluss- und/oder Verbindungsstück gehalten oder angeformt; und/oder
der die ersten Verbindungsmittel bildende wenigstens eine Vorsprung oder Zapfen (16) ist mit seiner Achse senkrecht oder annähernd senkrecht zu einem Anschlussbereich zwischen dem Abdeckprofil (1, 43) und dem Abschlussund/oder Verbindungsstück (10, 10a, 10b, 10c) oder der dortigen Anschlussfläche (13) orientiert;
   und/oder
die zweiten Verbindungsmittel sind an einem Funktionselement des Abschlussund/oder Verbindungsstücks vorgesehen, beispielsweise als wenigstens ein zusätzliches Element oder durch Anformen;
   und/oder
die zweiten Verbindungsmittel sind von wenigstens einem Stift oder Vorsprung gebildet, der am Abschluss- und/oder Verbindungsstück oder an dem Funktionselement dieses Abschluss- und/oder Verbindungsstücks vorgesehen oder angeformt ist;
   und/oder
es sind zwischen dem Funktionselement und einem die ersten Verbindungsmittel aufweisenden Teil des Abschluss- und/oder Verbindungsstücks wirkende Führungsmittel vorgesehen, die das Funktionselement beim Eindrücken des wenigstens einen Vorsprungs in das Abdeckprofil an dem die ersten Verbindungsmittel aufweisenden Teil des Abschluss- und/oder Verbindungsstücks führen;
   und/oder
die Führungsmittel sind von ineinander greifenden Zapfen gebildet;
   und/oder
das Abschluss- und/oder Verbindungsstück besteht aus wenigstens einem Unterteil und aus einem dieses Unterteil zumindest teilweise abdeckenden Oberteil;
   und/oder
das Oberteil ist bezogen auf die erste Achsrichtung radial auf das Unterteil aufsetzbar;
   und/oder
es sind zwischen dem Oberteil und dem Unterteil wirkende Führungsmittel vorgesehen, die das Oberteil beim Aufsetzen am Unterteil führen;
   und/oder
das Abschluss- und/oder Verbindungsstück überbrückt mit seiner Oberseite, vorzugsweise mit einem Abschnitt des Oberteils den Anschlussbereich zwischen Abdeckprofil und Abschluss- und/oder Verbindungsstück;
es sind wenigstens zwei die zweiten Verbindungsmittel bildende Vorsprünge vorgesehen;
   und/oder
die wenigstens zwei die zweiten Verbindungsmittel bildenden Vorsprünge sind mit ihrer Längserstreckung in einer senkrecht zur ersten Achsrichtung orientierten Ebene liegen und/oder in Richtung in Richtung einer zweiten senkrecht zur ersten orientierten Achsrichtung gegeneinander versetzt;
es sind wenigstens zwei Gruppen von jeweils zwei die zweiten Verbindungsmittel bildenden Vorsprüngen vorgesehen;
   und/oder
das Abschluss- und/oder Verbindungsstück ist an seiner dem Anschlussbereich oder der dortigen Anschlussfläche abgewandten Rückseite konvex gekrümmt;
   und/oder
im Abschluss- und /oder Verbindungsstück ist wenigstens ein Kanal ausgebildet, der am Anschlussbereich bzw. an der dortigen Anschlussfläche in wenigstens einen im Abdeckprofil ausgebildeten Kanal mündet;
   und/oder
der wenigstens eine Kanal ist an der Unterseite des Abschluss- und/oder Verbindungsstücks offen;
   und/oder
der wenigstens eine Kanal ist an der Oberseite des Abschluss- und/oder Verbindungsstücks oder des Unterteils offen;
   und/oder
der wenigstens eine Kanal ist im Unterteil ausgebildet;
   und/oder
der wenigstens eine Kanal ist im Oberteil ausgebildet;
   und/oder
es sind Mittel zum Sichern von Leitungen in dem wenigstens einen Kanal vorgesehen;
   und/oder
das Abschluss- und/oder Verbindungsstück ist wenigstens zweiteilig ausgebildet, und zwar bestehend aus einem Unterteil, welches die ersten Verbindungsmittel aufweist, sowie aus einem Oberteil, welches die zweiten Verbindungsmittel aufweist;
   und/oder
das Abschluss- und/oder Verbindungsstück weist zusätzlich zum Oberteil und Unterteil einen Deckel auf, mit dem der an der Oberseite des Anschluss- und/oder Verbindungsstücks offene Kanal verschließbar ist.
das Abschluss- und/oder Verbindungsstück weist zum Verbinden von wenigstens zwei Abdeckprofilen wenigstens zwei Anschlussbereiche oder Anschlussflächen auf und an jedem Anschlussbereich sind die ersten und zweiten Verbindungsmittel vorgesehen;
   und/oder
es ist wenigstens ein Gelenk zwischen den wenigstens zwei Anschlussbereichen oder Anschlussflächen vorgesehen;
   und/oder
das Abschluss- und/oder Verbindungsstück ist beidseitig von dem wenigstens einem Gelenk jeweils wenigstens zweiteilig ausgebildet, und zwar bestehend aus dem Oberteil und dem Unterteil.

Weiterbildungen der Erfindung sind auch Gegenstand der Unteransprüche. Die Erfindung wird im Folgenden anhand der Figuren an Ausführungsbeispielen näher erläutert. Es zeigen:
- Fig. 1: in vereinfachter Darstellung und in Draufsicht ein Ende eines Abdeckprofils für Leitungen bzw. einer Kabelbrücke, zusammen mit einem Abschlussstück gemäß der Erfindung;
- Fig. 2: einen Schnitt durch die Kabelbrücke der Figur 1;
- Fig. 3: das Abschlussstück in Draufsicht;
- Fig. 4: einen Schnitt durch das Abschlussstück der Figuren 1 und 3, entsprechend der Schnittlinie I-I der Figur 3, und zwar in einer Explosionsdarstellung;
- Fig. 5: eine Darstellung ähnlich Figur 4, jedoch entsprechend der Schnittlinie II-II der Figur 3;
- Fig. 6: eine Darstellung ähnlich Figur 4, jedoch entsprechend der Schnittlinie III-III der Figur 3;
- Fig. 7: eine Darstellung ähnlich Figur 4, jedoch entsprechend der Schnittlinie IV-IV der Figur 3;
- Fig. 8: eine Draufsicht auf die Oberseite des Unterteils des bei dieser Ausführungsform im Wesentlichen zweiteiligen Abschlussstücks;
- Fig. 9: eine Draufsicht auf die Unterseite des Unterteils der Figur 8;
- Fig. 10: eine Draufsicht auf die Oberseite des Oberteils des im Wesentlichen zweiteiligen Abschlussstücks;
- Fig. 11: eine Draufsicht auf die Unterseite des Oberteilsteils der Figur 10;
- Fig. 12: eine Draufsicht auf ein Verbindungsstück gemäß der Erfindung;
- Fig. 13-16: Darstellung wie Figuren 4 - 7 bei einer weiteren Ausführungsform der Erfindung;
- Fig. 17: in vereinfachter Darstellung eine Draufsicht auf ein Ende eines Abdeckprofils und das an diesem Ende vorgesehene Abschlussstück;
- Fig. 18: einen Schnitt durch das Abdeckprofil bzw. durch die von diesem Profil gebildete Kabelbrücke der Figur 17;
- Fig. 19: einen Schnitt durch das Anschlussstück der Figur 17 und das Abdeckprofil entsprechend der Linie V - V der Figur 17;
- Fig. 20: und 21 Schnitte durch das mehrteilige Abschlussstück der Figur 17 entsprechend den Linien VI - VI bzw. VII - VII.

Zur Erleichterung des Verständnisses sind in den Figuren weiterhin die drei senkrecht zueinander verlaufenden Raumachsen, nämlich die X-Achse, Y-Achse und Z-Achse angegeben.

In den Figuren ist 1 ein Abdeckprofil oder Kabelkanal, der im Wesentlichen aus einem durch Extrudieren hergestellten Profilkörper 2 aus Kunststoff besteht, dessen Dichte größer ist als 1,8 g/cm³ und dessen Elastizitätsmodul kleiner ist als 500 N/mm², sodass das Abdeckprofil 1 bzw. dessen Profilkörper 2 beim Verlegen auf einem Untergrund 3 durch das hohe spezifische Gewicht bzw. die hohe Dichte und durch das niedrige Elastizitätsmodul "schlapp" oder zumindest weitestgehend "schlapp" auf diesem Untergrund 3 insbesondere auch mit den Randbereichen flächig aufliegt sowie Unebenheiten des Untergrundes 3 folgt. Der Profilkörper 2 ist an seiner Oberseite um Achsen in Profillängsrichtung bzw. in Richtung der X-Achse konvex gewölbt und weist mehrere, sich in Profillängsrichtung erstreckende Kanäle 4 und 5 auf, die jeweils an der ebenen Unterseite des Profilkörpers 2 zugänglich sind und zur Aufnahme von Kabeln bzw. Leitungen unterschiedlichster Art dienen. An den Randbereichen ist in den Profilkörper 2 jeweils ein weiterer, geschlossener Kanal 7 eingebracht, der sich ebenfalls wie die Kanäle 4 und 5 über die gesamte Länge des Abdeckprofils 1 erstreckt. An der Oberseite ist der Profilkörpers 2 mit einer relativ dünnen Schicht 8 aus einem verschleißfesten Kunststoff versehen, die (Schicht) die konvex gewölbte Oberseite des Abdeckprofils 1 bildet. Ein Abdeckprofil dieser Art ist Gegenstand des deutschen Patentes 101 48 937.

Bevorzugt weist das Abdeckprofil 1 zusätzlich zu der Schicht 8, die die Oberseite dieses Abdeckprofils bildet auch eine Schicht 8.1 auf, die die Unterseite des Abdeckprofils 1 bildet und aus einem gummielastischen Kunststoff besteht. Aus dem die Schicht 8.1 bildenden Material sind auch die die Öffnungen der Kanäle 4 und 5 begrenzenden elastischen Lippen 4.1 und 5.1 gebildet. Weiterhin sind mit dem Material der Schicht 8.1 auch die Innenflächen der Kanäle 4 und 5 beschichtet. Diese Ausbildung hat den Vorteil, dass ein Einreißen des jeweiligen Abdeckprofils 1 beim Einlegen der Leitungen 6 in die Kanäle 4 und 5 und bei dem dabei erfolgenden elastischen Verformungen des Abdeckprofils wirksam verhindert ist, und zwar auch dann, wenn für den Profilkörper 2 zur Erhöhung seiner Dichte ein Kunststoffmaterial verwendet wird, welches einen besonders hohen Anteil an einem die Dichte erhöhenden Füller, beispielsweise Magnetit aufweist. Bevorzugt ist die Schicht 8.1 den Profilkörper 2 vollständig umhüllend aufgebracht, so dass sich die Schicht 8.1 auch unter der Schicht 8 erstreckt.

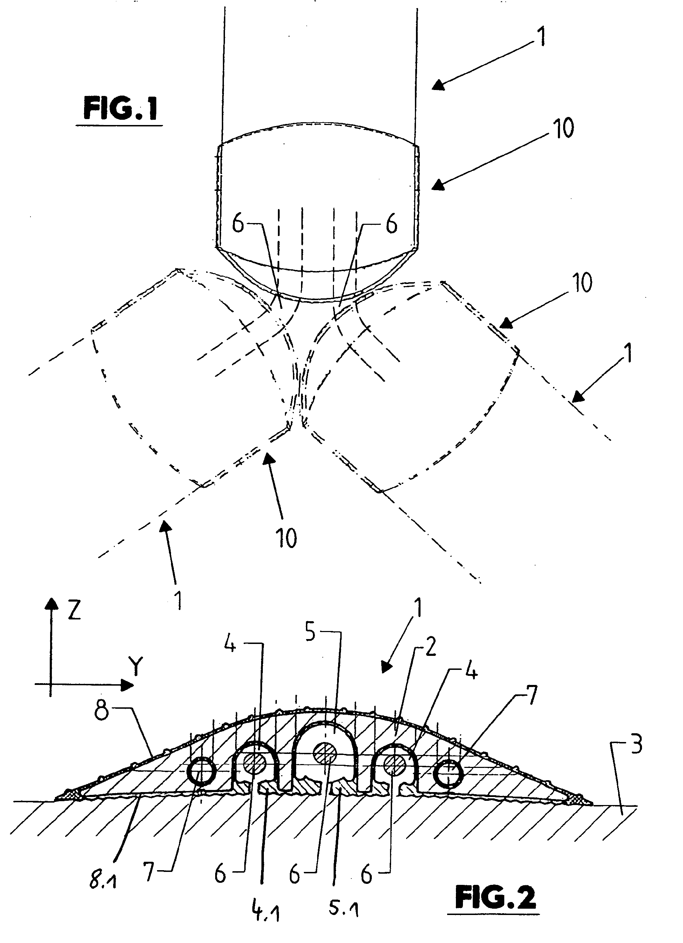

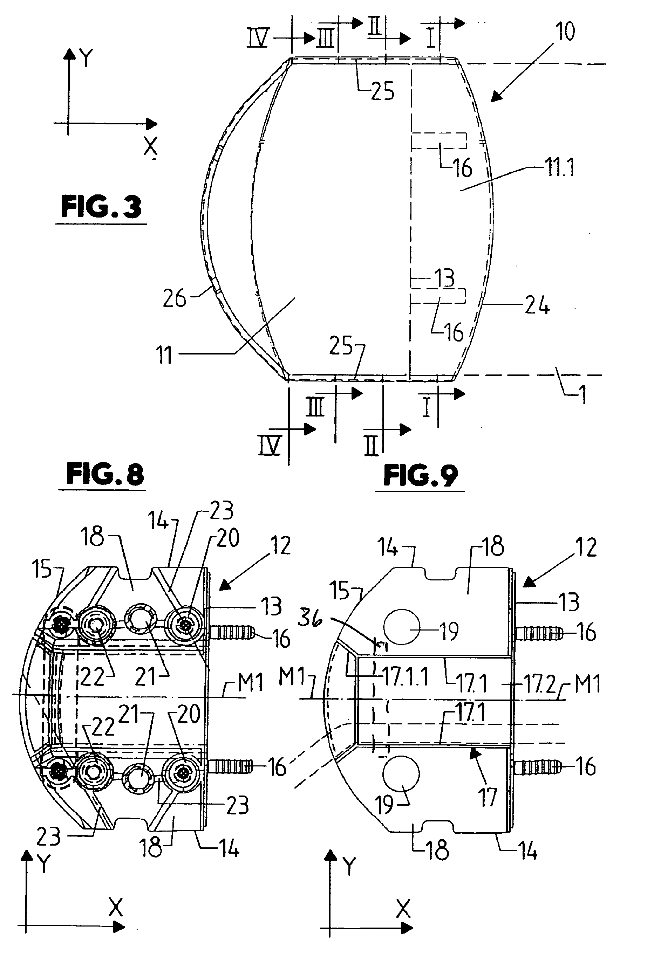

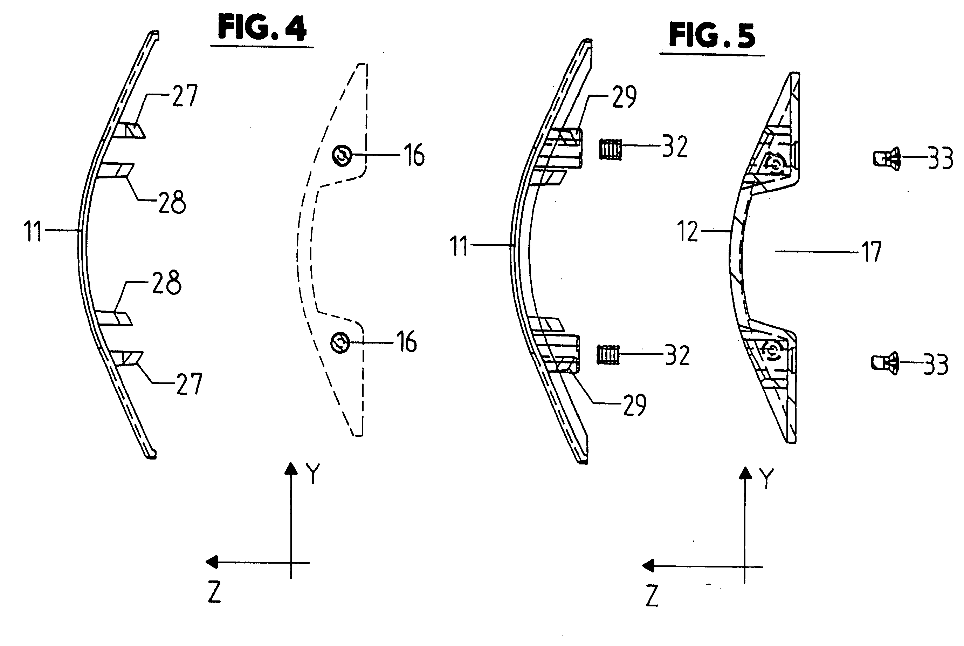

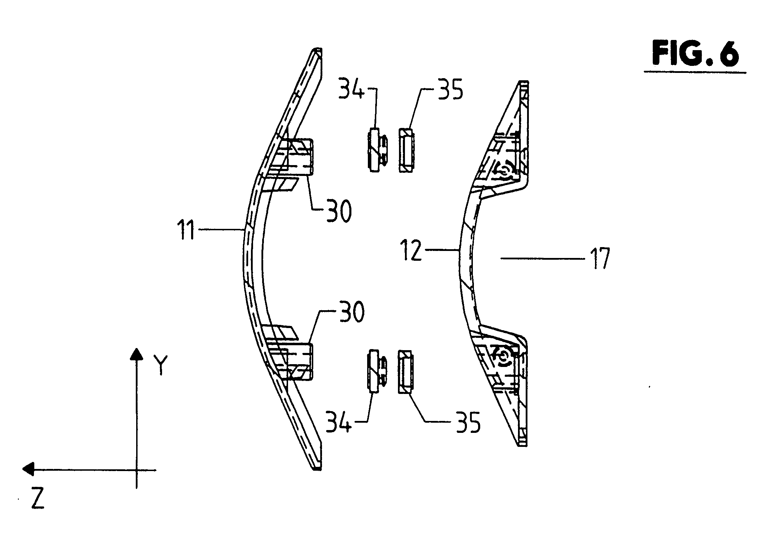

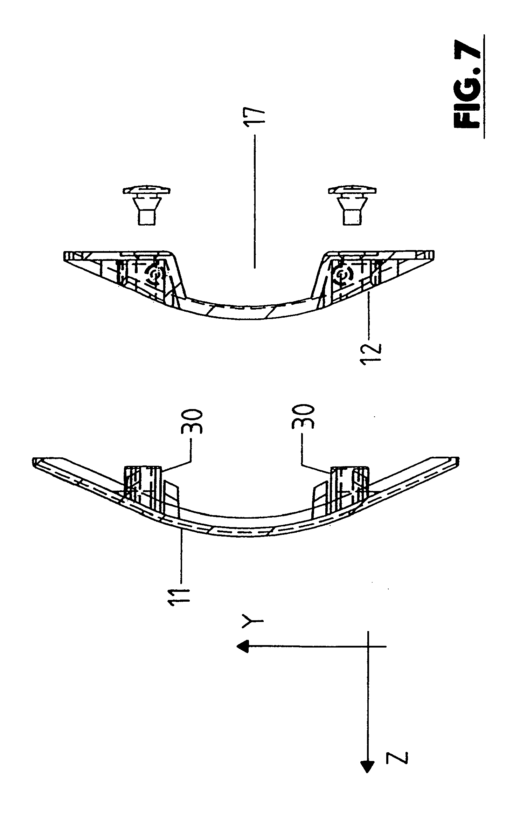

Mit 10 ist in den Figuren 1 - 11 ein Abschlussstück bezeichnet, welches an einem Ende des Abdeckprofils 1 vorgesehen ist, und zwar dort, wo die Leitungen 6 aus dem Abdeckprofil 1 herausgeführt sind, um diese Leitungen 6 beispielsweise an einem Arbeitstisch, z.B. am Fuß des Arbeitstisches nach oben zu führen. Das Abschlussstück 10 kann aber auch aus anderen Gründen an dem jeweiligen Ende eines Abdeckprofils 1 vorgesehen sein, z.B. um die Leitungen 6 mit einer im Gebäudeboden 3 oder an einer Gebäudewand vorgesehenen gebäudeseitigen Installation zu verbinden usw. Weiterhin sind Abschlussstücke 10 z.B. auch dort vorgesehen, wo mehrere Abdeckprofile 1 aneinander anschließen, um beispielsweise die zunächst in einem Abdeckprofil 1 vorhandenen Leitungen 6 in mehrere Richtungen zu verteilen, wie dies in der Figur 1 mit unterbrochenen Linien angedeutet ist.

Bei der dargestellten Ausführungsform ist das Abschlussstück 10 zweiteilig ausgeführt und besteht aus einer oberen Abdeckkappe oder Oberteil 11 und einem Unterteil 12. Beide Teile sind Formteile aus Kunststoff, d. h. durch Spritzgießen aus Kunststoff gefertigt, und zwar aus einem Kunststoff mit ausreichender Festigkeit, beispielsweise aus Polyamid.

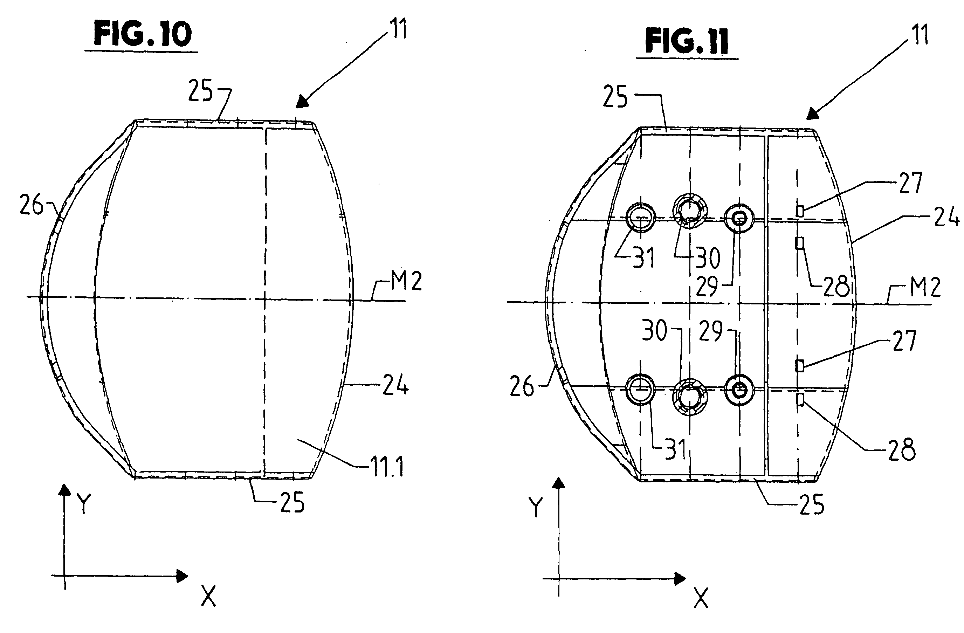

Das Unterteil besitzt in Draufsicht auf die Oberseite und Unterseite die in den Figur 8 und 9 dargestellte Formgebung, d.h. eine ebene vordere Stirnseite 13, die den Anschlussbereich bzw. die Anschlussfläche zum Anschließen an das Abdeckprofil 1 bildet und an die sich jeweils ein kürzerer, geradlinig verlaufender Rand 14 rechtwinklig anschließt. An der der Stirnseite 13 gegenüberliegenden Rückseite 15, ist das Unterteil 12 in der Draufsicht der Figuren 8 und 9 kreisbogenförmig konvex gekrümmt.

An der Stirnseite 13 sind zwei über diese Stirnseite bzw. wegstehende und mit ihrer Achse senkrecht zur Y-Z-Ebene der Stirnseite 13 orientierte Zapfen 16 angeformt, die jeweils eine Vielzahl von ringförmigen Rasten aufweisen, bei am Ende des Abdeckprofils 1 befestigtem Abschlussstück 10 jeweils in einen Kanal 7 eingreifen und dadurch das Unterteil 12 bezogen auf die Längserstreckung des Abdeckprofils bzw. X-Achse radial formschlüssig mit dem Abdeckprofil 1 verbinden. Die Stirnseite 13 des Unterteils 12 ist weiterhin so ausgebildet, dass diese formgleich an das Ende des Abdeckprofils anschließt, d.h. bei mit seiner Unterseite auf dem Boden 3 aufliegendem Unterteil 12 liegt der konvex gewölbte obere Rand der Stirnseite 13 bündig mit der von der Schicht 8 gebildeten Außenfläche des Abdeckprofils 1. Das Unterteil 12 weist somit zumindest an der Stirnseite 13 einen Querschnitt auf, dessen Außenkontur dem Querschnitt bzw. der Außenkontur des Abdeckprofils 1 entspricht.

Wie insbesondere die Figur 9 zeigt, ist das Unterteil 12 weiterhin so geformt, dass es an seiner Unterseite einen sich von der Stirnseite 13 zur Rückseite 15 bzw. in Richtung der X-Achse erstreckenden Kanal 17 bildet, der an Unterseite des Unterteils 12 offen ist und an der Stirnseite 13 zwischen den beiden Vorsprüngen oder Zapfen 16 mündet. Der Kanal 17 ist von zwei seitlichen Wandbereichen 17.1 und einem oberen Wandabschnitt 17.2 begrenzt, welches die Oberseite des Oberteils bildet und der Formgebung der Oberseite des Abdeckprofils 1 entsprechend an der Oberseite des Unterteils konvex und an der Innenseite des Kanals 17 konkav gewölbt ist.

An der Rückseite 15 ist die Breite des Kanals 17 durch die dort schräg verlaufenden Wandabschnitte 17.1 bei 17.1.1 etwas vergrößert, um die Möglichkeit eines seitlichen Herausführens von Leitungen 6 zu verbessern, wie dies in der Figur 9 für die dortige Leitung 6 mit unterbrochenen Linien angedeutet ist. Beidseitig von dem Kanal 17 weist das Unterteil 12 jeweils einen eine ebene Unterseite bildenden Wandabschnitt 18 auf, mit dem das Unterteil 12 auf dem Boden 3 aufliegt. An der Unterseite sind bei der dargestellten Ausführungsform aus einem gummielastischen Material gefertigte Rutschpuffer 19 vorgesehen.

An der Oberseite sind an den Wandabschnitten 18 an jeder Seite des geschlossenen Kanals 17 jeweils drei Hohlzapfen 20, 21 und 22 sowie auch Verstärkungsstege angeformt, die sich teilweise zwischen den Hohlzapfen sowie auch zwischen den Hohlzapfen und dem Seitenrand 14 des Unterteils erstrecken. Die Hohlzapfen 20 - 22 und die Stege 23 sind so ausgebildet, dass sie innerhalb der von dem oberen, konvex gekrümmten Rand der Stirnseite 13 gebildeten Kontur liegen. Im Bereich der Rückseite 15 ist das Unterteil 12 insbesondere an der oberen Begrenzungswandung leicht abgeschrägt, sodass dort das Hinterteil 12 eine etwas reduzierte Höhe besitzt.

Im Übrigen ist das Unterteil 12 bei der dargestellten Ausführungsform spiegelsymmetrisch zu einer Mittelebene M1 ausgebildet, die senkrecht zu der von den Wandabschnitten 18 gebildeten Unterseite des Unterteils 12 orientiert ist und eine X-Y-Ebene ist.

Das Oberteil 11 ist als Abdeckkappe ausgebildet, und zwar derart, dass es passend auf das Unterteil 12 aufgesetzt werden kann und dieses Unterteil dann passend umschließt.

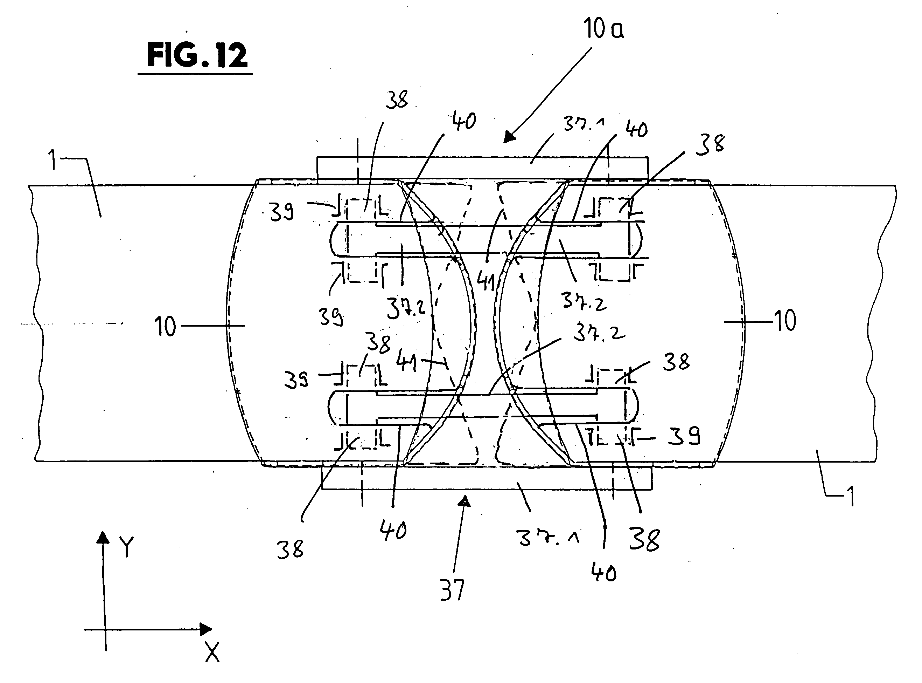

Das Oberteil 11 besitzt somit den Figuren 10 und 11 entsprechend in Draufsicht eine Formgebung mit einem konvex gekrümmten vorderen Rand 24, zwei sich jeweils an den Rand 24 anschließenden geradlinig verlaufenden Rändern 25 und einem konvex gekrümmten rückwärtigen Rand 26, ist an seiner Unterseite dem Verlauf bzw. der Kontur der Oberseite des Abdeckprofils 1 entsprechend konkav gekrümmt und im Übrigen so ausgebildet, dass es nach dem Aufsetzen auf das Unterteil 12 dieses vollständig abdeckt. Die Ränder 25 liegen dann den Rändern 14 und die Rückseite 26 der Rückseite 15 benachbart, wobei das Oberteil 11 aber mit dem vorderen Rand 24 bzw. mit einem Abschnitt 11.1 über die Stirnseite 13 des Unterteils in Richtung der X-Achse vorsteht, und zwar mit einer Länge, die größer ist als die Länge der Zapfen 16. Die Ränder 25 liegen parallel zu einer Mittelebene M2, zu der das Oberteil 11 spiegelsymmetrisch ausgebildet ist und die die X-Y-Ebene ist.

An der Unterseite des Oberteils 11 sind beidseitig von der Mittelebene M2 und mit Abstand von dieser zwei Vorsprünge 27 und 28 angeformt. Die Vorsprünge 27 und 28 sind jeweils in Richtung der Y-Achse voneinander beabstandet, und zwar mit einem Abstand, der größer ist als der Außendurchmesser der Zapfen 16. Weiterhin sind sämtliche Vorsprünge 27 und 28 in einer gemeinsamen Y-Z-Ebene angeordnet und an ihren freien Enden messerschneideartig zulaufend angeordnet, und zwar mit der Schneide in der Y-Z-Ebene liegend. Die Anordnung und Länge der Vorsprünge 27 und 28 ist weiterhin so gewählt, dass bei auf das Unterteil 12 passend aufgesetztem Oberteil 11 jeder Zapfen 16 sich durch den Zwischenraum oder Spalt zwischen zwei Vorsprüngen 27 und 28 hindurcherstreckt.

An der Unterseite des Oberteils 11 sind weiterhin beidseitig von der Mittelebene M2 Zapfen 29, 30 und 31 angeformt, und zwar derart, dass für eine formschlüssige Verbindung des Oberteils 11 mit dem Unterteil 12 jeder Zapfen 29 in einen Hohlzapfen 20, jeder Zapfen 30 in einen Hohlzapfen 21 und jeder Zapfen 31 in einen Hohlzapfen 22 des Unterteils eingreift. Das endgültige Sichern des Oberteils 11 am Unterteil 12 erfolgt dann beispielsweise durch Verschrauben und/oder Verrasten. Für das Verschrauben sind in die als Hohlzapfen ausgebildeten Zapfen 29 jeweils mit einem Muttergewindestück 32 aus Metall versehen, welches in diesen Zapfen beispielsweise durch Einpressen verankert ist und in welches eine eine Bohrung in der Wandung 18 durchgreifende Schraube 33 einschraubbar ist. Für das Verrasten sind beispielsweise die entsprechenden Zapfen, beispielsweise wiederum die Zapfen 29 und 20 oder aber andere zusammenwirkende Zapfen des Oberteils 11 und des Unterteils 12 mit entsprechenden Rastelementen 34 bzw. 35 versehen, die bevorzugt als vorgefertigte Bauteile mit dem Oberteil 11 bzw. Unterteil 12 nach dem Spritzgießen verbunden werden. Auch Kombinationen von Schraub- und Rastverbindungen sind möglich. Weiterhin ist es möglich bei dem Abschlussstück sowohl Schraubverbindungen als auch Rastverbindungen zwischen dem Oberteil 11 und dem Unterteil 12 vorzusehen.

Da der Kanal 17 an der Unterseite des Unterteils und damit auch an der Unterseite des Abschlussstückes 10 offen ist kann es zweckmäßig sein, die Leitungen 6 im Kanal 17 so zu sichern, dass sie bei einem Anheben des Abschlussstückes 10 im Kanal 17 verbleiben. Hierfür ist bei der dargestellten Ausführungsform eine Lasche 36 vorgesehen, die an dem rückwärtigen Ende des Abschlussstückes 10, d. h. an der Rückseite 15 durch Verschrauben an dem Unterteil 12 beidendig befestigt ist, und zwar derart, dass die Lasche 36 den Kanal 17 an der Unterseite des Abschlussstückes 10 überbrückt. Es versteht sich, dass das Unterteil 12 so ausgebildet ist, dass die vorzugsweise auch als Zugentlastung dienende Lasche 36 mit ihrer Unterseite bündig mit der Unterseite des Unterteils 12 liegt.

Zur Befestigung des Abschlussstückes 10 an dem Ende des Abdeckprofils 1 wird zunächst das Unterteil 12 bei abgenommenem Oberteil 11 mit den beiden Zapfen 16 jeweils in einen Kanal 7 eingeschoben, sodass das Unterteil 12 mit seiner Stirnseite 13 an das Ende des Abdeckprofils 1 stumpf anschließt und sämtliche Kanäle 4 und 5 des Abdeckprofils 1 in den Kanal 17 münden. Durch die in die geschlossenen Kanäle 7 eingreifenden Zapfen 16 ist die formschlüssige radiale Verbindung zwischen dem Abdeckprofil 1 und dem Unterteil 12 hergestellt. Im Anschluss daran wird das Oberteil 11 auf das Unterteil 12 aufgesetzt, und zwar derart, dass die einander zugehörigen Zapfen 20/29, 21/30 und 22/31 ineinander greifen und dadurch das Oberteil 11 am Unterteil 12 geführt ist. Bei dem Aufsetzen des Oberteils 11 auf das Unterteil 12 dringen die Vorsprünge 27 und 28 durch die Schicht 8 in den Profilkörper 2 ein, sodass dann nach dem vollständigen Aufsetzen und Fixieren des Oberteils 11 am Unterteil 12 das Abschlussstück 10 auch in der Achsrichtung der X-Achse parallel zur Längserstreckung des Abdeckprofils bzw. parallel zur Achse der Zapfen 16 am Abdeckprofil 1 gesichert ist und selbst bei hohen, auf das Abschlussstück 10 ausgeübten Zugkräften ein Lösen des Abschlussstücks 10 vom Abdeckprofil 1 nicht eintritt. Da die beiden Vorsprünge 27 und 28 in das Abdeckprofil 1 in der Nähe der Zapfen 16 eindringen, erfolgt durch diese Zapfen eine Abstützung des Materials des Profilkörpers 2, wodurch das vollständige Eindringen der Vorsprünge 27 und 28 erleichtert wird.

Durch die Kanäle 7 ist beim Einsetzen der Zapfen 16 die exakte Lage des Unterteils 12 im Bezug auf das Ende des Abdeckprofils 1 gewährleistet. Weiterhin hat die radiale Fixierung durch die Zapfen 16 den Vorteil, dass die Unterseite des Unterteils 12 bündig mit der Unterseite des Abdeckprofils 1 liegen kann, das Abdeckprofil 1 also auch am Übergang zum Anschlussstück dicht auf dem Boden 3 aufliegt.

Durch die ineinander greifenden Zapfen 20/29, 21/30 und 22/31, die mit ihren Achsen in der Y-Achse und damit senkrecht zu den Achsen der Vorsprünge oder Zapfen 16 orientiert sind wird nicht nur eine eindeutige Lage des Oberteils 11 auf dem Unterteil 12 definiert, sondern es wird auch für die formschlüssige Verbindung zwischen dem Abschlussstück und dem Abdeckprofil notwenige formschlüssige Verbindung zwischen dem Oberteil 11 und dem Unterteil 12 erreicht. Weiterhin ergibt sich eine Führung des Oberteils 11 am Unterteil 12 beim Eindrücken der Vorsprünge 27 und 28 in den Profilkörper. Ein seitliche Ausweichen des Oberteils 11 beim Eindrücken ist damit vermieden. Bei verbundenem Oberteil 11 und Unterteil 12 ist die Mittelebene M2 identisch mit der Mittelebene M2.

Bei der beschriebenen Ausführungsform wird also durch die Zapfen 16 eine Fixierung des Abschlussstückes 10 in radialer Richtung und durch das Oberteil 11, welches durch seinen Abschnitt 11.1 auch den Übergang zwischen dem Abdeckprofil und dem Anschlussstück optisch einwandfrei abdeckt, bzw. durch die dortigen Vorsprünge 27 und 28 die axiale Fixierung erreicht, sodass für die formschlüssige dauerhafte Verbindung des Abschlussstückes 10 mit dem Abdeckprofil 1 kein weiteres Element erforderlich ist.

Durch die Runde Formgebung des Abschlussstückes an seiner dem Abdeckprofil 1 abgewandten Rückseite ist es möglich, über mehrere Abschlussstücke 10 mehrere Abdeckprofile 1 sternförmig aneinander anzuschließen, wie dies in der Figur 1 mit unterbrochenen Linien angedeutet ist.

Durch den an der Unterseite des Abschlussstückes 10 offenen Kanal 17 können die Leitungen 6 auch bei bereits mit dem Abschlussstück 10 verbundenem Abdeckprofil 1 in dessen Kanäle 4 und 5 sowie in den Kanal 17 von unten her eingebracht werden.

Wie in der Figur 12 mit 10a angedeutet, kann das Abschlussstück auch als Verbindungsstück zwischen zwei aneinander anschließenden Abdeckprofilen 1 ausgebildet sein, und zwar insbesondere in der Form, dass das Abschlussstück 10a ein Gelenk bildet, mit dem die jeweils aneinander anschließenden und über das Abschlussstück 10a miteinander verbundenen Abdeckprofile 1 im Nichtgebrauchszustand aufeinander geklappt werden können, und zwar derart, dass diese Profile dann z.B. für Transport- und/oder Lagerzwecke zickzackförmig oder ziehharmonikaartig aufeinanderliegen. Für den Gebrauch werden dann die über ein oder mehrere Abschlussstücke 10a miteinander verbundenen Abdeckprofilen 1 wieder so angeordnet, dass sie auf einem Boden oder Untergrund wieder aneinander anschließen. Das Anschlussstück 10a besteht in diesem Fall beispielsweise aus zwei Anschlussstücken 10, die über eine geeignete Gelenkverbindung, beispielsweise über eine zwei Gelenkhebel 37.1 aufweisende Gelenkverbindung 37 miteinander verbunden sind.

Um die außen liegenden, zumindest optisch störenden Gelenkhebel 37.1 der Gelenkverbindung 37 zu vermeiden, besteht auch die Möglichkeit, das Gelenk 37 unter Verwendung von Gelenkhebeln 37.2 zu realisieren, die jeweils beidendig im Inneren des geschlossenen Abschlussstücks 10 schwenkbar gelagert sind, und zwar wiederum um Achsen senkrecht zur Längserstreckung der Abdeckprofile 1 und parallel zur Unterseite der Anschlussstücke 10 bzw. parallel zur Ebene des Bodens oder Untergrunds. Die beiden Gelenkhebel 37.2 sind z.B. aus Kunststoff gefertigt und an ihren Enden mit einem angeformten Gelenkzapfen 38 versehen bzw. geformt, der in jeweils einem beispielsweise im Unterteil 12 an der Innenseite des jeweiligen Abschlussstückes 10 angeformten und in einer in der Figur 12 schematisch mit 39 angedeuteten Lageröffnung gelagert ist. Um das Schwenken der Gelenkhebel 37.2 sowie das ziehharmonikaartige Zusammenfalten der über das Abschlussstück 10a miteinander verbundenen Abdeckprofile 1 zu ermöglichen, sind in den Anschlussstücken Öffnungen 40 vorgesehen, die an der Oberseite, an der Unterseite und an den einander zugewandten Rückseiten der Anschlussstücke 10 offen sind und in denen bei auf einen Boden oder Untergrund aufliegenden Abdeckprofilen 1 die Gelenkhebel 37.2 jeweils mit einer Teillänge aufgenommen sind. Die Öffnungen 40 sind durch entsprechende Ausnehmungen im Oberteil 11 und im Unterteil 12 gebildet. Da die Gelenkhebel 37.2 jeweils mit einer Teillänge in einer Ausnehmung oder Öffnung 40 aufgenommen sind, ergibt sich innerhalb dieser Ausnehmungen eine seitliche Abstützung für die Gelenkhebel 37.2 und damit eine verbesserte Stabilität für das Abschlussstück 10a im Verwendungsfall.

Bei der in der Figur 12 dargestellten Ausführungsform kann es unabhängig von der speziellen Ausbildung des Gelenks 37 zweckmäßig sein, die Anschlussstücke 10 an ihrer dem jeweiligen Abdeckprofil 1 abgewandten Rückseite nicht, wie in der Figur 12 dargestellt, konvex auszubilden, sondern konkav, wie dies in der Figur 12 mit den unterbrochenen Linien 41 angedeutet ist, um so einen Freiraum für die in den Abdeckprofilen aufgenommenen und sich über das Abschlussstück 10a erstreckenden Leitungen 6 nach dem Zusammenfalten der Abdeckprofile 1 zu erreichen.

Vorstehend wurde davon ausgegangen, dass der sich in Richtung der X-Achse erstreckende Kanal 17 an der Unterseite des Unterteils 12 und damit an der Unterseite auch des an dem jeweiligen Abdeckprofil 1 befestigten Abschlussstücks 10 offen ist, so dass die Leitungen 6 an der Unterseite des Abdrückprofils 1 und auch der Abschlussstücke 10 bzw. 10a her eingelegt werden können. In dem Abdeckprofil 1 sind die Leitungen 6 dann in den dortigen Kanälen 4 und 5 dadurch gehalten, dass diese Kanäle an der Unterseite des Abdeckprofils nur über Schlitze zugänglich sind, die seitlich von Zungen aus dem elastischen Material des Abdeckprofils bzw. aus dem Material der Schicht 8.1 begrenzt sind.

Um ein Herausfallen oder Herausrutschen der Leitungen 6 aus den an der Unterseite offenen Abschlussstücken 10 zu vermeiden, besteht die Möglichkeit die Leitungen 6 in dem an der Unterseite offenen Kanal 17 zu sichern, beispielsweise durch einen zusätzlichen Deckel oder aber durch die in der Figur 9 mit den unterbrochenen Linien angedeutete und den Kanal 17 überbrückenden Lasche oder Zugentlastung 36.

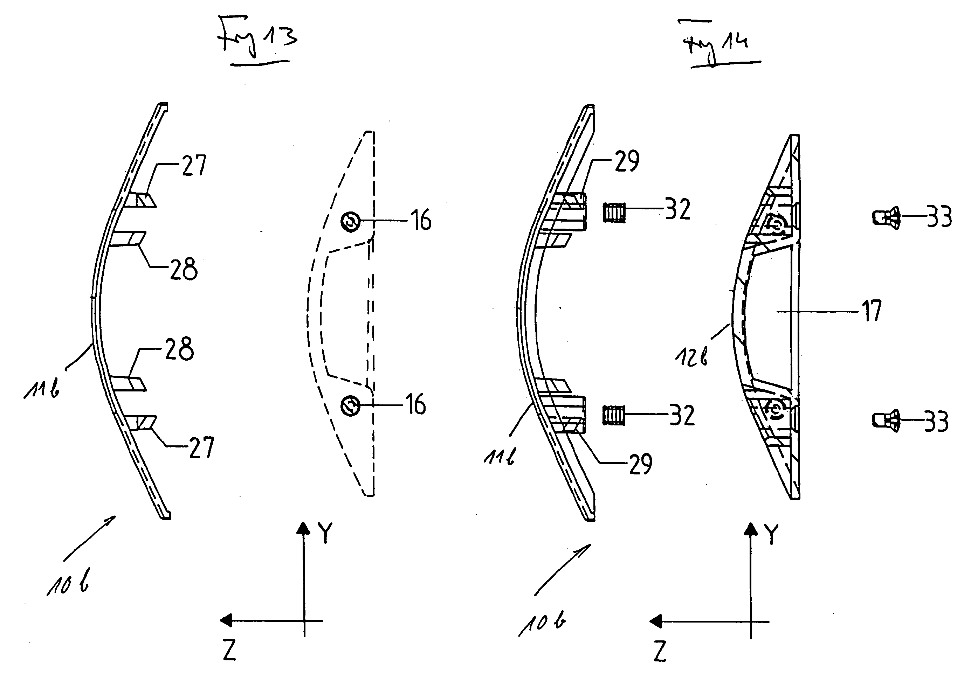

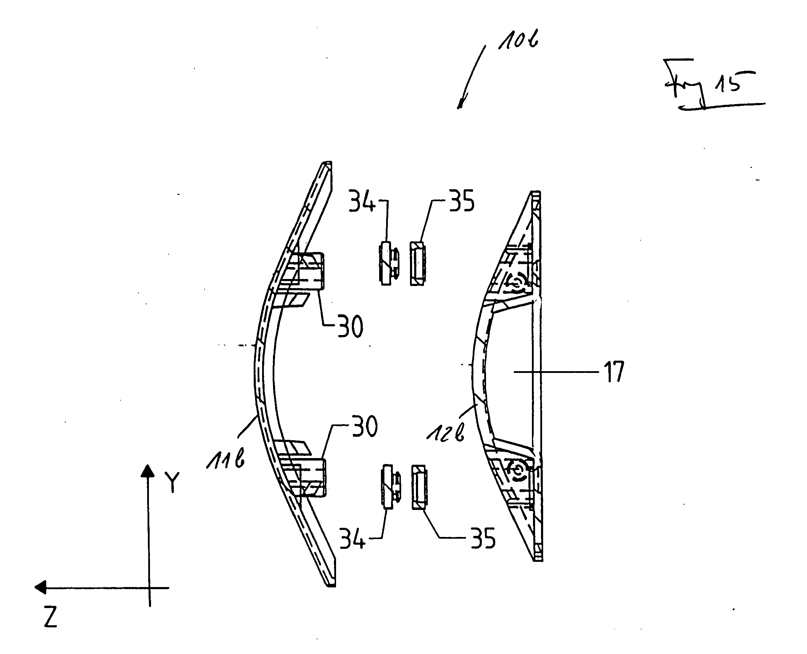

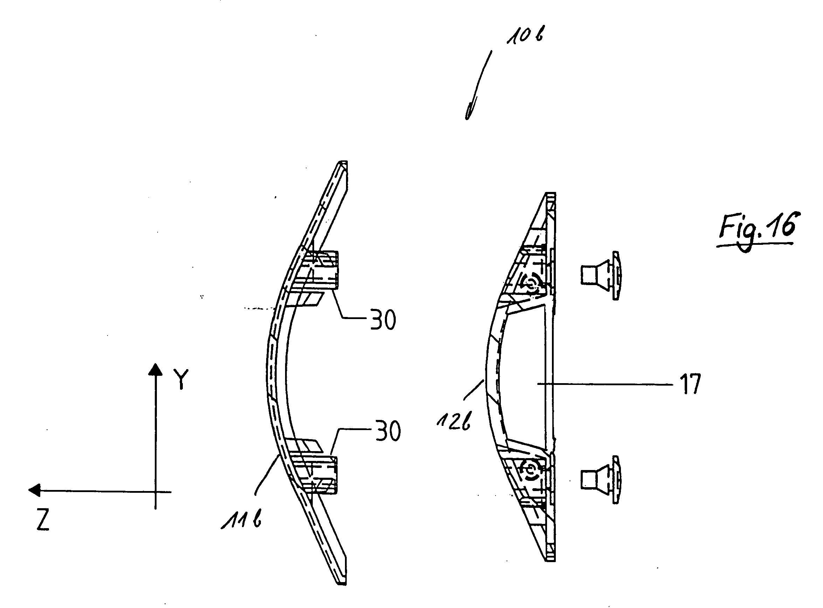

Die Figuren 13-16 zeigen als weitere Ausführungsform ein Abschlussstück 1b, welches wiederum im Wesentlichen zweiteilig bestehend aus dem Oberteil 11b und dem Unterteil 12b ausgebildet ist und sich von dem Abschlussstück 10 im Wesentlichen nur dadurch unterscheidet, dass das Unterteil 12b im Bereich des Kanals 17 zur Aufnahme der Leitungen 6 an der Unterseite geschlossen ist. Die Montage der Abschlussstücke 10b erfolgt dann an den Enden des Abdeckprofils 1 in der Form, dass nach dem Einlegen der Leitungen in die Kanäle 4 und/oder 5 des Abdeckprofils 1 das Unterteil 12b an dem jeweiligen Ende des Abdeckprofils 1 durch Einführen der Zapfen 16 in die Kanäle 7 angebracht wird, so dass die Leitungen 6 in dem an der Unterseite des Unterteil 1 2b geschlossenen Kanal 17 aufgenommen sind. Im Anschluss daran wird das Oberteil 11 b aufgesetzt und am Unterteil 12b fixiert, und zwar beispielsweise durch Verschrauben mit den Schrauben 33 oder aber durch Verrasten. Hierbei drücken sich wiederum die Vorsprünge 27 und 28 in das Material des Abdeckprofils ein und fixieren dadurch das Abschlussstück 10b am Abdeckprofil.

Vorstehend wurde davon ausgegangen, dass die Leitungen 6 in das Abdeckprofil 1 jeweils von dessen Unterseite her in die Kanäle 4 und 5 eingebracht werden, wobei das Abdeckprofil 1 zur einfacheren Handhabung gewendet ist, so dass die Unterseite dieses Profils oben liegt.

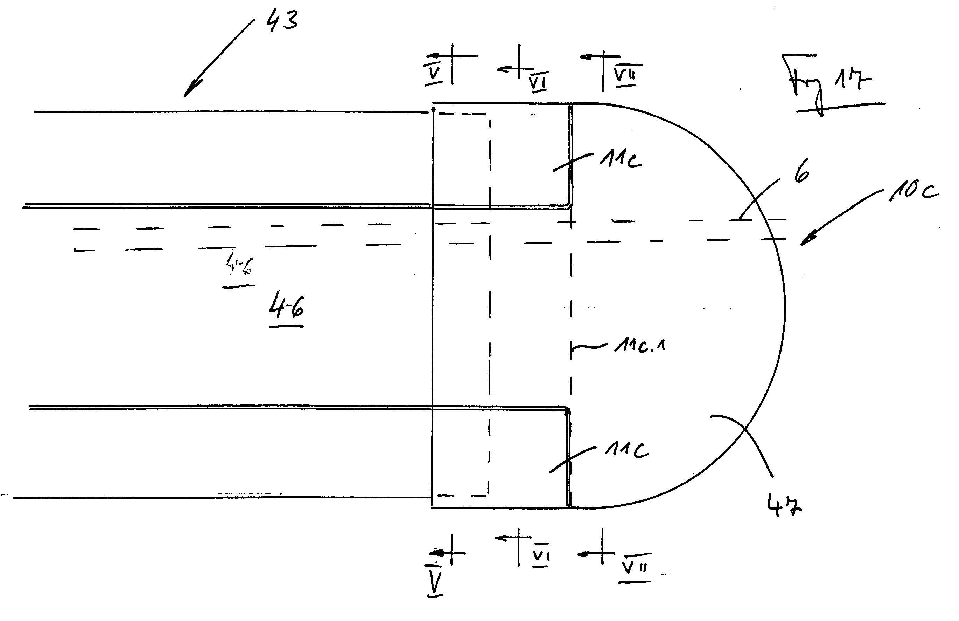

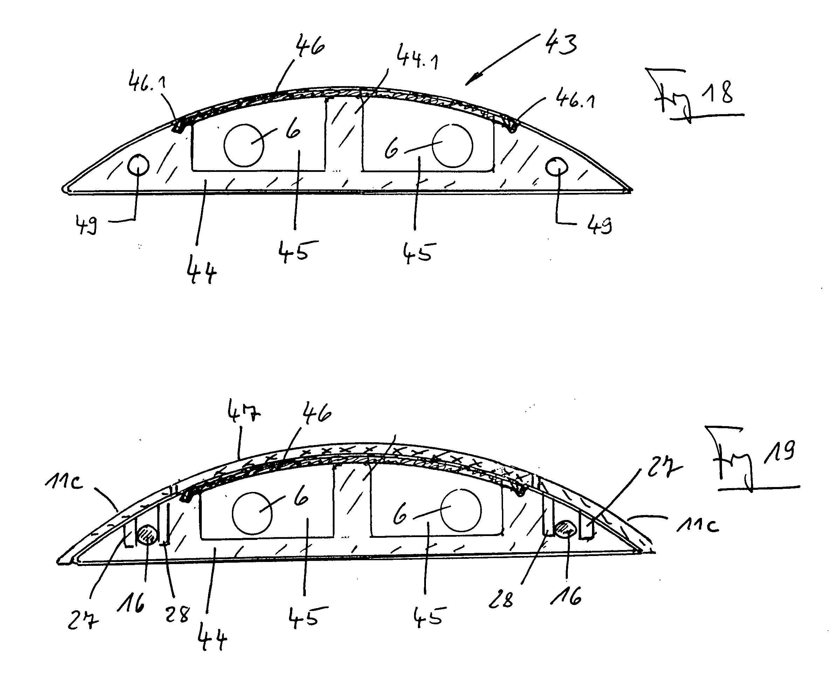

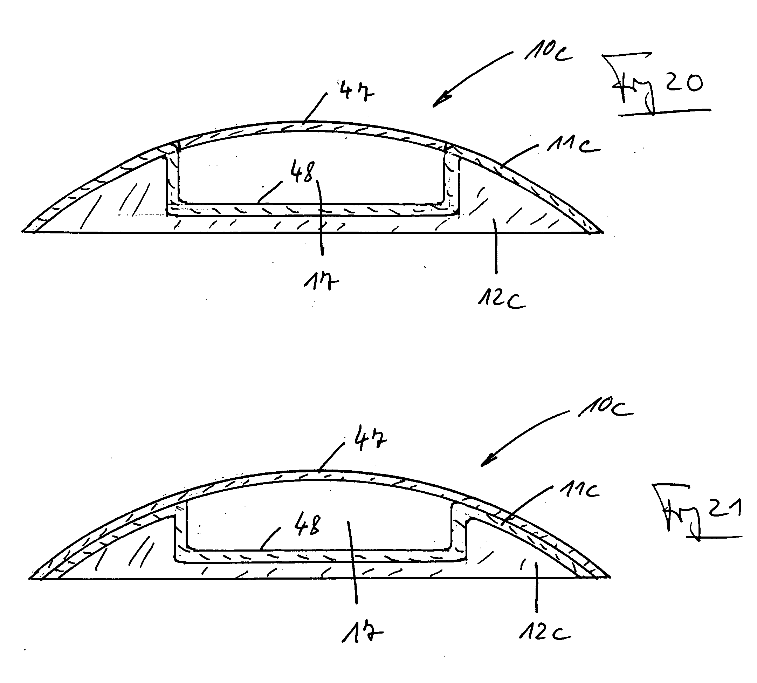

Die Figuren 17-21 zeigen als weitere Ausführungsform ein Abdeckprofil 43, welches von dem Material und von den Eigenschaften seines Profilkörpers 44 her dem Abdeckprofil 1 bzw. den Profilkörper 2 voll entspricht und ebenso wie der Profilkörper 2 mit der die Abdeckprofiloberseite bildenden Schicht 8 und mit der die Abdeckprofilunterseite bildenden Schicht 8.1 versehen ist. Das Abdeckprofil 43 unterscheidet sich von dem Abdeckprofil 1 aber durch vergrößerte Abmessungen, d.h. insbesondere durch eine größere Breite senkrecht zur Profillängsrichtung. Weiterhin unterscheidet sich das Abdeckprofil 43 vom Abdeckprofil 1 aber dadurch, dass anstelle der Kanäle 5 und 6 von der Abdeckprofiloberseite her zugängliche Kanäle 45 zur Aufnahme der Leitungen 6 vorgesehen sind und diese Kanäle durch einen sich in Längsrichtung des Abdeckprofils 43 erstreckenden, leistenartigen Deckel 46 verschlossen sind. Der Deckel 46 ist aus Kunststoff gefertigt, bevorzugt aus dem Kunststoffmaterial der Schicht 8, und ist entlang seiner Längsränder 46.1 durch Verrasten am Profilkörper 44 gehalten. Zur Entlastung des Deckels 46 schützt sich dieser mit seiner Unterseite an Stegen 44.1 ab, die zwischen den Kanälen 46 am Profilkörper 44 gebildet sind.

Da das Einlegen der Leitungen 6 in die Kanäle 45 von der Oberseite des Abdeckprofils 43 erfolgt, sind die für dieses Abdeckprofil bestimmten Abschlussstücke so ausgebildet, dass das Einlegen der Leitungen 6 in das geöffnete Abschlussstück ebenfalls von oben erfolgen kann, d.h. für das Abdeckprofil eignen sich grundsätzlich Abschlussstücke, die entsprechend dem Abschlussstück 10b ausgebildet, aber selbstverständlich in den Abmessungen an die Abmessung, insbesondere Breite und Höhe des Abdeckprofils 43 angepasst sind.

In den 17-21 ist ein Abschlussstück 10c dargestellt, welches das Einlegen der Leitungen 6 von oben her ermöglicht und dreiteilig ausgebildet ist, und zwar bestehend aus einem kappenartigen Oberteil 11c, aus einem Unterteil 12c sowie aus einem zusätzlichen Deckel 47, der u.a. den Kanal 17 sowie das Unterteil 12c dort abdeckt, wo dieses Unterteil nicht bereits durch das Oberteil 11 c abgedeckt wird, d.h. insbesondere an der dem Abdeckprofil 43 abgewandten Rückseite des Abdeckprofils 43 angepasst Abschlussstückes 10c. Es versteht sich, dass das Abschlussstück 10c wieder an den Querschnitt des Abdeckprofils 43 angepasst ist. Der zur Oberseite des Abschlussstücks 10c hin offene Kanal 17 ist bei dieser Ausführungsform im Oberteil vorgesehen, und zwar dadurch, dass das Oberteil 11c in einem mittleren Bereich 49 wannenartig, d.h. als zur Oberseite und zur Vorder- und Rückseite offene Wanne ausgebildet ist.

Diese Ausführungsform bietet die Möglichkeit, die Abdeckprofile 43 jeweils beidendig oder aber auch nur an einem Ende mit einem Abschlussstück 10c vorzumontieren bzw. vorzukonfektionieren und in dieser Form auszuliefern und/oder für die Verwendung bereit zu halten, wobei dann bei abgenommenen Deckeln 46 und 47 die Leitungen in die Kanäle 45 und 17 eingelegt und im Anschluss daran diese Kanäle durch die Deckel 46 bzw. 47 verschlossen werden.

Für die Verbindung des Abschlussstücks 10c mit dem jeweiligen Ende des Abdeckprofils 43 ist das Unterteil 12c beispielsweise wiederum mit den Zapfen 16 versehen, die in die den zusätzlichen Kanälen 7 entsprechende Kanäle 49 eingreifenden. Das Oberteil 11c ist so ausgeführt, dass es nach der Montage den Übergang zwischen dem Unterteil 12c und dem Abdeckprofil 43 überlappt, d.h. hierfür über die den Abdeckprofil benachbarte Stirnseite des Unterteils 12c vorsteht. Am Oberteil 11 c sind z.B. wiederum die Vorsprünge 27 und 28 vorgesehen, die in das Material des Abdeckprofil 34 eingreifen. Die Befestigung des Oberteils 11c sowie des Unterteils 12c an dem jeweiligen Ende des Abdeckprofils 43 kann aber auch auf andere Weise erfolgen, in jedem Fall aber derart, dass sämtliche Kanäle 45 in den Kanal 17 münden. Die Verbindung zwischen dem Oberteil 11c und dem Unterteil 12c erfolgt beispielsweise durch Verrasten unter Verwendung von angeformten Rastelementen oder aber durch Verbindungselemente, beispielsweise Schrauben, Nieten usw. oder durch Verkleben oder Verschweißen. Der Deckel 47 ist durch Verrasten oder durch konventionelle Verbindungselemente, wie z.B. Schrauben usw. an dem Oberteil 11c bzw. Unterteil 12c gehalten.

Das Oberteil 11c erstreckt sich bei dieser Ausführungsform nur über einen Teil der zwischen der Vorderseite und Rückseite des Abschlussstückes 10c gebildeten Länge, wie dies in der Figur 17 mit der unterbrochenen Linie 11c.1 angedeutet ist. Der Vorteil dieser im Zusammenhang mit den Figuren 17-21 beschriebenen Ausführungsform besteht u.a. darin, dass zum Einlegen der Leitungen 6 das Abdeckprofil 43 nicht gewendet werden muss. Auch das Abschlussstück 10c kann ebenso wie das Abschlussstück 10b mit einer Zugentlastung 36 ausgebildet werden.

Die Erfindung wurde voranstehend an Ausführungsbeispielen beschrieben. Es versteht sich, dass zahlreiche Änderungen sowie Abwandlungen möglich sind, ohne das dadurch der der Erfindung zugrundeliegende Gedanke verlassen wird. So ist es insbesondere möglich, dass die axiale Fixierung des Abschlussstückes nicht durch das Oberteil erfolgt, welches auf ein radial mit dem Abdeckprofil fixiertes Unterteil an diesem geführt aufgesetzt wird, sondern durch ein weiteres Element, welches durch Eindringen in das Material des Abdeckprofils 1 in einer Achsrichtung radial oder annähernd radial zur Längserstreckung dieses Profils das Anschlussstück am Abdeckprofil auch axial sichert. Weiterhin kann die radiale Fixierung des Abschlussstückes auch anders, als vorstehend beschrieben erfolgen, beispielsweise dadurch, dass die Vorsprünge oder Zapfen 16 spitz zulaufende ausgeführt sind, sodass sie ohne die vorbereiteten Kanäle 7 in den Profilkörper 2 eingedrückt werden können.

### Bezugszeichenliste

- 1: Abdeckprofil
- 2: Profilkörper
- 3: Boden oder Untergrund
- 4, 5: Kanal
- 4.1, 5.1: Lippen
- 6: Leitung
- 7: zusätzlicher Kanal
- 8: Schicht

- 10, 10a: Abschlussstück
- 11: Oberteil
- 11.1: Abschnitt des Oberteils 11
- 12: Unterteil
- 13: Stirnseite
- 14: Seitenrand
- 15: Rückseite
- 16: Zapfen
- 17: Kanal
- 17.1: seitlicher Wandabschnitt
- 17.2: oberer Wandabschnitt
- 17.1.1: Abschrägung
- 18: Wandabschnitt
- 19: Rutschpuffer
- 20, 21, 22: Hohlzapfen
- 23: Steg
- 24,25,26: Rand
- 27, 28: Vorsprung mit Schneide
- 29, 30, 31: Zapfen
- 32: Muttergewindestück
- 33: Schraube
- 34, 35: Rastelement
- 36: Lasche, Zugentlastung
- 37: Gelenk
- 37.1: Gelenkhebel
- 37.2: Gelenkhebel
- 38: Gelenkzapfen
- 39: Gelenköffnung oder Gelenkstelle
- 40: Ausnehmung
- 41: Linie
- 43: Abdeckprofil
- 44: Profikörper des Abdeckprofils 43
- 44.1: Materialsteg
- 45: Kanal
- 46,47: Deckel
- 46.1: Deckel rand
- 48: mittlerer, wannenartiger Abschnitt des Oberteils 11c
- 49: zusätzlicher Kanal
- M1: Symmetrie- oder Mittelebene des Unterteils 12
- M2: Symmetrie- oder Mittelebene des Oberteils 11
- X, Y, Z: Raumachsen

## Patentansprüche

1. Abschluss- und/oder Verbindungsstück zur Befestigung am Ende wenigstens eines Abdeckprofils (1, 43) für Leitungen (6),
**gekennzeichnet**
**durch** erste zwischen dem Abschluss- und/oder Verbindungsstück (10, 10a, 10b, 10c) und dem Abdeckprofil (1, 43) wirkende Verbindungsmittel (16) zum Herstellen einer bezogen auf eine erste Achsrichtung (X-Achse), die beispielsweise der Längserstreckung des Abdeckprofils (1, 43) entspricht, radialen formschlüssigen Verbindung zwischen dem Abdeckprofil (1, 43) und
dem Abschluss- und/oder Verbindungsstück (10, 10a, 10b, 10c) durch Stecken oder Fügen sowie
**durch** zweite am Abschluss- und/oder Verbindungsstück (10, 10a, 10b, 10c) vorgesehene oder in dieses integrierte, zwischen dem Abschluss- und/oder Verbindungsstück (10, 10a, 10b, 10c) und dem Abdeckprofil (1, 43) wirkende und in dieses Profil eingreifenden Verbindungsmittel (27, 28) für ein Fixieren der Verbindung in axialer Richtung.

2. Abschluss- und/oder Verbindungsstück nach Anspruch 1, **dadurch**
**gekennzeichnet,**
**dass** die ersten Verbindungsmittel von wenigstens einem einen Anschlussbereich zwischen dem Abdeckprofil (1, 43) und dem Abschlussund/oder Verbindungsstück (10, 10a, 10b, 10c) überbrückenden Zapfen (16) gebildet sind,
wobei
beispielsweise der wenigstens eine die ersten Verbindungsmittel bildende Zapfen (16) an einer Anschlussseite (13) des Abschluss- und/oder Verbindungsstücks (10, 10a, 10b, 10c) vorgesehen ist, an der dieses Verbindungsstück an das Abdeckprofil (1, 43) anschließt, vorzugsweise stumpf anschließt,
und/oder wobei
beispielsweise der wenigstens eine, die ersten Verbindungsmittel bildende Vorsprung oder Zapfen (16) am Abschluss- und/oder Verbindungsstück (10, 10a, 10b, 10c) gehalten oder angeformt ist,
und/oder wobei
beispielsweise der die ersten Verbindungsmittel bildende wenigstens eine Vorsprung oder Zapfen (16) mit seiner Achse senkrecht oder annähernd senkrecht zu einem Anschlussbereich zwischen dem Abdeckprofil (1, 43) und dem Abschluss- und/oder Verbindungsstück (10, 10a, 10b, 10c) oder der dortigen Anschlussfläche (13) orientiert ist,
und/oder wobei
beispielsweise der wenigstens eine Zapfen oder Vorsprung (16) mit seiner Längserstreckung axial oder annähernd axial oder radial oder annähernd radial zur ersten Achsrichtung (X-Achse) orientiert ist.

3. Abschluss- und/oder Verbindungsstück nach Anspruch 1 oder 2, **dadurch**
**gekennzeichnet,**
**dass** die zweiten Verbindungsmittel an einem Funktionselement (11, 11 b, 11 c) des Abschluss- und/oder Verbindungsstücks (10, 10a, 10b, 10c) vorgesehen sind, beispielsweise in Form wenigstens ein zusätzliches Element oder durch Anformen,
und/oder
**dass** die zweiten Verbindungsmittel von wenigstens einem Stift oder Vorsprung (27, 28) gebildet sind, der am Abschluss- und/oder Verbindungsstück (10, 10a, 10b, 10c) oder an dem Funktionselement (11, 11 b, 11 c) dieses Abschlussund/oder Verbindungsstücks (10, 10a, 10b, 10c) vorgesehen ist beispielsweise in Form wenigstens ein zusätzliches Element oder durch Anformen.

4. Abschluss- und/oder Verbindungsstück nach einem der vorhergehenden Ansprüche, **gekennzeichnet durch** zwischen dem Funktionselement (11, 11b, 11c) und einem die ersten Verbindungsmittel (16) aufweisenden Teil des Abschluss- und/oder Verbindungsstücks (10, 10a, 10b, 10c) wirkende Führungsmittel, die das Funktionselement (11, 11 b, 11 c) beim Eindrücken des wenigstens einen zweiten Verbindungselementes (27, 28) in das Abdeckprofil (1, 43) an dem die ersten Verbindungsmittel aufweisenden Teil des Abschluss- und/oder Verbindungsstücks (10, 10a, 10b, 10c) führen,
wobei die Führungsmittel beispielsweise von ineinander greifenden Zapfen (20, 21, 22; 29, 30, 31) gebildet sind.

5. Abschluss- und/oder Verbindungsstück nach einem der vorhergehenden Ansprüche, **dadurch gekennzeichnet,**
**dass** es aus wenigstens einem Unterteil (12, 12b, 12c) und aus einem dieses Unterteil zumindest teilweise abdeckenden Oberteil (11, 11 b, 11c) besteht,
wobei beispielsweise das Oberteil bezogen auf die erste Achsrichtung radial auf das Unterteil (12, 12b, 12c) aufsetzbar ist,
und/oder
**dass** zwischen dem Oberteil (11, 11b, 11 c) und dem Unterteil (12, 12b, 12c) wirkende Führungsmittel (20, 29; 21, 30; 22, 31) vorgesehen sind, die das Oberteil (11, 11b, 11c) beim Aufsetzen am Unterteil (12, 12b, 12c) führen.

6. Abschluss- und/oder Verbindungsstück nach einem der vorhergehenden Ansprüche, **dadurch gekennzeichnet, dass** wenigstens zwei die zweiten Verbindungsmittel bildende Vorsprünge (27, 28) vorgesehen sind,
wobei
beispielsweise die wenigstens zwei die zweiten Verbindungsmittel bildenden Vorsprünge (27, 28) mit ihrer Längserstreckung in einer senkrecht zur ersten Achsrichtung (X-Achse) orientierten Ebene liegen und/oder in Richtung in Richtung einer zweiten senkrecht zur ersten orientierten Achsrichtung (Y-Achse) gegeneinander versetzt sind,
und/oder wobei
beispielsweise wenigstens zwei Gruppen von jeweils zwei die zweiten Verbindungsmittel bildenden Vorsprüngen (27, 28) vorgesehen sind.

7. Abschluss- und/oder Verbindungsstück nach einem der vorhergehenden Ansprüche, **gekennzeichnet durch** wenigstens einen im Abschluss- und /oder Verbindungsstück (10, 10a, 10b, 10c) ausgebildeten Kanal (17), der am Anschlussbereich bzw. an der dortigen Anschlussfläche (13) in wenigstens einen im Abdeckprofil (1, 43) ausgebildeten Kanal (4, 5, 45) mündet,
wobei
beispielsweise der wenigstens eine Kanal (17) an der Unterseite oder an der Oberseite des Abschluss- und/oder Verbindungsstücks (10, 10a) oder des Unterteils (12b, 12c) offen ist,
und/oder wobei
beispielsweise der wenigstens eine Kanal (17) im Unterteil (12, 12a) und/oder im Oberteil (11c) ausgebildet ist,
und/oder wobei
in dem wenigstens einen Kanal (17) Mittel (36) zum Sichern von Leitungen (6) vorgesehen sind.

8. Abschluss- und/oder Verbindungsstück nach einem der vorhergehenden Ansprüche, **dadurch gekennzeichnet,**
**dass** es mit seiner Oberseite, vorzugsweise mit einem Abschnitt (11.1) des Oberteils den Anschlussbereich zwischen Abdeckprofil (1, 43) und Abschlussund/oder Verbindungsstück überbrückt,
und/oder
**dass** das Abschluss- und/oder Verbindungsstück an seiner dem Anschlussbereich oder der dortigen Anschlussfläche (13) abgewandten Rückseite (15, 26) konvex gekrümmt ist.

9. Abschluss- und/oder Verbindungsstück nach einem der vorhergehenden Ansprüche, **dadurch gekennzeichnet,**
**dass** es zum Verbinden von wenigstens zwei Abdeckprofilen (1, 43) wenigstens zwei Anschlussbereiche oder Anschlussflächen (13) aufweist, und dass an jedem Anschlussbereich die ersten und zweiten Verbindungsmittel vorgesehen sind,
und/oder
**dass** wenigstens ein Gelenk (37) zwischen den wenigstens zwei Anschlussbereichen oder Anschlussflächen (13) vorgesehen ist;
und/oder
**dass** das Abschluss- und/oder Verbindungsstück beidseitig von dem wenigstens einem Gelenk (37) jeweils wenigstens zweiteilig bestehend aus dem Oberteil (11, 11 b, 11 c) und dem Unterteil (12, 12b, 12c) ausgebildet ist.

10. Abschluss- und/oder Verbindungsstück nach einem der vorhergehenden Ansprüche, **dadurch gekennzeichnet, dass** es wenigstens zweiteilig ausgebildet ist, und zwar bestehend aus einem Unterteil (12, 12b, 12c), welches die ersten Verbindungsmittel (16) aufweist, sowie aus einem Oberteil (11, 11b, 11c), welches die zweiten Verbindungsmittel (27, 28) aufweist,
wobei beispielsweise zusätzlich zum Oberteil (11c) und Unterteil (12c) ein Deckel (47) vorgesehen ist, mit dem der an der Oberseite des Anschlussund/oder Verbindungsstücks (10c) offene Kanal (17) verschließbar ist.
